(19) **Europäisches Patentamt**
**European Patent Office**
**Office européen des brevets**

(11) **EP 4 134 223 A1**

(12) **EUROPEAN PATENT APPLICATION**

(43) Date of publication:
**15.02.2023 Bulletin 2023/07**

(21) Application number: **22189061.9**

(22) Date of filing: **05.08.2022**

(51) International Patent Classification (IPC):
**B29C 59/08** (1985.01)     **B29C 65/48** (1985.01)
**B29C 65/00** (1985.01)

(52) Cooperative Patent Classification (CPC):
(C-Sets available)
**B29C 59/08; B29C 65/483; B29C 66/028;**
**B29C 66/71**                                        (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **06.08.2021  JP 2021129992**

(71) Applicant: **Sika Hamatite Co., Ltd.**
**Kanagawa 254-0014 (JP)**

(72) Inventors:
• **Matsuki, Yuichi**
  **Kanagawa 254-0014 (JP)**
• **Miura, Kazuki**
  **Kanagawa 254-8601 (JP)**
• **Abe, Megumi**
  **Kanagawa 254-8601 (JP)**

(74) Representative: **Dilg, Haeusler, Schindelmann**
**Patentanwaltsgesellschaft mbH**
**Leonrodstraße 58**
**80636 München (DE)**

(54) **BONDED ARTICLE AND METHOD FOR PRODUCING SAME**

(57)     The present invention provides a bonded article that exhibits an excellent bonded state without use of a primer, and a method for producing the same. A bonded article, comprising: a first member containing plastic and including a portion that has been flame-treated under a condition A1 shown below; a second member; and an adhesive that bonds the first member and the second member to each other, wherein the first member adheres with the adhesive at the flame-treated portion, and a primer is not interposed between the first member and the adhesive:

(Condition A1) a volume ratio $R_{A1}$ of air and combustion gas used for generation of flame in the flame treatment, and a volume ratio $R_p$ of air and combustion gas when the combustion gas is completely combusted satisfy the following formula (1):

$$0.8 \leq \text{volume ratio } R_{A1}/\text{volume ratio } R_P \leq 1 \quad (1)$$

EP 4 134 223 A1

**(Cont. next page)**

# FIG. 1

(a) 10a
10

(b) 12a
12

(c) 30
12

(d) 100
20
32
12

(52) Cooperative Patent Classification (CPC): (Cont.)

C-Sets
**B29C 66/71, B29K 2503/04**

**Description**

BACKGROUND OF THE INVENTION

The present invention relates to a bonded article and a method for producing the same.

Related Art

Conventionally, steel plates have been used for interior and exterior members of an automobile such as a body, a front door, a rear door, a back door, a front bumper, a rear bumper, and a rocker molding of an automobile, but plastics such as polypropylene resin are increasingly used for the interior/exterior members from the viewpoint of reducing the weight of the automobile.

When plastic (resin) is used for interior/exterior members of an automobile as described above, usually, a primer is applied to bonding surfaces of resin members, and then an adhesive is applied thereon, followed by lamination. However, the above case involves problems such as an increase in the number of steps in the work process, and there is a demand for an adhesive composition having excellent adhesion properties to a resin member without use of a primer.

So far, there have been proposed a method for producing a laminated member (for example, JP 2017-128052 A), or an isocyanate-based adhesive (for example, Japanese Patent No. 6756393), which exhibit excellent adhesion properties to a resin member subjected to a surface treatment such as a dry treatment without use of a primer.

SUMMARY OF THE INVENTION

Recently, there has been a demand for further improvement in adhesion properties of an adhesive with respect to a resin member in use for automobiles.

In light of this, the inventors of the present invention produced a bonded article using a flame-treated member and an adhesive without using a primer, with reference to JP 2017-128052 A and Japanese Patent No. 6756393. Consequently it has been found that there was room for improvement in the bonded state of the bonded article.

In view of the above circumstances, it is a main object of the present invention to provide a bonded article that exhibits an excellent bonded state without use of a primer.

In addition, the inventors of the present invention have found the following two problems in relation to the above-described issue (to provide a bonded article that exhibits an excellent bonded state without use of a primer).

One is whether or not an air-rich condition in which the dry treatment has been performed on a plastic substrate is suitable for improving the adhesion properties, and the other is why there is a case where the adhesion properties are poor although the wet tension after the dry treatment satisfies the evaluation criteria that have been considered to provide good adhesion properties.

Usually, the wet tension of a plastic member after the dry treatment is confirmed using a mixture solution (wetting reagent) defined in JIS K 6768: 1999.

It is conventionally said that the larger the wet tension is, the higher the wettability to the adhesive is, and the adhesion properties between the plastic member and the adhesive is improved. For example, a polypropylene-containing substrate before the flame treatment has a wet tension of about 28 to 30 mN/m, but a wet tension of about 40 mN/m or more after the flame treatment is regarded as an indication of the good adhesion properties.

In general, in a dry treatment such as flame treatment, a volume ratio $R_K$ of air and combustion gas used for the generation of the flame (volume ratio $R_K$ = air/combustion gas at the generation of the flame in the dry treatment) is set to be greater than a volume ratio $R_P$ of air and combustion gas when the combustion gas is completely combusted (volume ratio $R_P$ = air/combustion gas when the combustion gas is completely combusted). This is because when the volume ratio $R_K$ is set to be greater than the volume ratio $R_P$, that is, when the flame treatment is performed under an air-rich condition, the obtained wet tension can be considerably increased as compared with that before the flame treatment. For example, in a case of a polypropylene-containing substrate, the substrate can be caused to have a wet tension of 40 mN/m or more after the flame treatment.

As described above, it has been conventionally considered that the adhesion properties between the substrate and an adhesive after the dry treatment is improved by performing a dry treatment (for example, flame treatment; the same applies hereinafter) on a plastic substrate in an air-rich state to obtain a wet tension much greater than that before the dry treatment (for example, the difference in a wet tension between before and after the flame treatment is 10 mN/m or more).

However, contrary to the above expectation, the inventors of the present invention have found that in spite that a plastic substrate subjected to the dry treatment in an air-rich state so as to have a wet tension considerably greater than that before the dry treatment was used, the adhesion properties between the substrate and the adhesive was not necessarily improved. From the above findings, the inventors of the present invention have found the above-described two problems.

As a result of intensive studies on the above-described issue (to provide a bonded article that exhibits an excellent bonded state without use of a primer), the inventors of the present invention have found that in a dry treatment of a plastic-containing member, an air-rich condition that has been conventionally applied is not necessarily suitable for improving adhesive properties. They have found that the above-described problems can be solved by performing a dry treatment under a condition of being gas-rich or complete combustion of combustion gas (hereinafter, also referred to as "gas-rich condition or the like").

Further, in the evaluation of the wet tension with a wetting reagent, which has been conventionally performed to confirm the adhesion properties, it has been found that an increase in the wet tension from before to after the dry treatment does not necessarily correlate with the adhesion properties between a plastic member and an adhesive. It has been found that when a plastic substrate is subjected to a dry treatment under a gas-rich condition or the like, even if an increase in a wet tension from before to after the dry treatment is small (for example, a difference in a wet tension between before and after the flame treatment is 8 mN/m or less), adhesion properties between the plastic substrate and the adhesive after the dry treatment is improved.

That is, the inventors of the present invention have found that the above-described problems can be solved by the following configuration.

[1] A bonded article, comprising:

a first member containing plastic and including a portion that has been flame-treated under a condition A1 shown below; a second member; and an adhesive that bonds the first member and the second member to each other, wherein the first member adheres with the adhesive at the flame-treated portion, and a primer is not interposed between the first member and the adhesive:

(Condition A1) a volume ratio $R_{A1}$ of air and combustion gas used for generation of flame in the flame treatment, and a volume ratio $R_P$ of air and combustion gas when the combustion gas is completely combusted satisfy the following formula (1):

$$0.8 \leq \text{volume ratio } R_{A1}/\text{volume ratio } R_P \leq 1 \quad (1)$$

[2] The bonded article according to [1], wherein the first member contains a polyolefin-based resin as the plastic and an inorganic substance.

[3] The bonded article according to [1] or [2], wherein the adhesive is a urethane-based adhesive, an epoxy-based adhesive, a modified silicone-based adhesive, or an acryl-based adhesive.

[4] The bonded article according to any one of [1] to [3], wherein the second member contains plastic, includes a portion that has been flame-treated under a condition A2 shown below, and adheres with the adhesive at the flame-treated portion:

(Condition A2) a volume ratio $R_{A2}$ of air and combustion gas used for generation of flame in the flame treatment, and a volume ratio $R_P$ of air and combustion gas when the combustion gas is completely combusted satisfy the following formula (2):

$$0.8 \leq \text{volume ratio } R_{A2}/\text{volume ratio } R_P \leq 1 \quad (2)$$

[5] The bonded article according to any one of [1] to [4], wherein the combustion gas contains propane gas or natural gas.

[6] A method for producing a bonded article, the method comprising:

a surface treatment step of flame-treating a first member containing plastic under a condition A1 shown below; an adhesive application step of applying an adhesive to the flame-treated first member without a primer interposed therebetween; and a bonding step of laminating the second member on the adhesive and bonding the first member, the adhesive, and the second member:

(Condition A1) a volume ratio $R_{A1}$ of air and combustion gas used for the generation of flame in the flame treatment, and a volume ratio $R_P$ of air and combustion gas when the combustion gas is completely combusted satisfy the following formula (1):

$$0.8 \leq \text{volume ratio } R_{A1}/\text{volume ratio } R_P \leq 1 \quad (1)$$

[7] The method for producing a bonded article according to [6], wherein

the second member contains plastic,
the method further comprising another surface treatment step of flame-treating the second member under a condition A2 shown below, the another surface treatment step being performed in advance before the bonding step,
wherein, in the bonding step, the flame-treated second member is laminated on the adhesive:
(Condition A2) a volume ratio $R_{A2}$ of air and combustion gas used for generation of flame in the flame treatment, and a volume ratio $R_P$ of air and combustion gas when the combustion gas is completely combusted satisfy the following formula (2):

$$0.8 \leq \text{volume ratio } R_{A2}/\text{volume ratio } R_P \leq 1 \quad (2)$$

EFFECTS OF THE INVENTION

The bonded article of the present invention has an excellent bonded state even without use of a primer.
With the production method of the present invention, a bonded article exhibiting an excellent bonded state can be obtained without use of a primer.

BRIEF DESCRIPTION OF DRAWINGS

FIGS. 1A to 1D are schematic cross-sectional views showing one embodiment of a production method of the present invention in order of steps;

FIG. 2 is an image obtained by analyzing, with a TEM, a cross section of a first member that has been flame-treated under a condition (air-rich) shown in Comparative Example 1, enlarging and photographing the cross section at a magnification of 100,000 times; and

FIG. 3 is an image obtained by performing a shear test under Condition 2 of Comparative Example 1, then analyzing, with a TEM, a cross section of an adhesive layer of a portion visually evaluated as having undergone AF (interfacial fracture), and enlarging and photographing the cross section at a magnification of 100,000 times.

DETAILED DESCRIPTION OF THE INVENTION

The present invention is described below.
Incidentally, in the present specification, a numerical range represented by "(numerical value) to (numerical value)" means a range including the numerical values described before and after "to", as a lower limit value and an upper limit value.

[Bonded article of the present invention]

A bonded article of the present invention is a bonded article in which an adhesive bonds a first member and a second member to each other, the first member containing plastic and including a portion that has been flame-treated under a condition A1 shown below,

the first member adheres with the adhesive at the flame-treated portion, and

a primer is not interposed between the first member and the adhesive,

(Condition A1) a volume ratio $R_{A1}$ of air and combustion gas used for the generation of flame in the flame treatment, and a volume ratio $R_P$ of air and combustion gas when the combustion gas is completely combusted satisfy the following formula (1):

$$0.8 \leq \text{volume ratio } R_{A1}/\text{volume ratio } R_P \leq 1 \dots (1)$$

Since the bonded article of the present invention has such a configuration, it is presumed that the bonded article exhibits an excellent bonded state. The reason for this is not clear, but is presumed as follows.

(Improvement of adhesion properties by flame treatment under gas-rich condition or the like)

Conventionally, as described above, in order to increase the difference in a wet tension due to a wetting reagent between before and after the dry treatment, the dry treatment was performed in an air-rich state with respect to the combustion gas, that is, in an atmosphere having more oxygen with respect to the combustion gas as compared with a condition of complete combustion of the combustion gas.

The inventors of the present invention, however, consider that the dry treatment under an air-rich condition excessively introduces oxygen atoms into the surface of the plastic member, thereby making the surface of the plastic member brittle. That is, the excessive introduction of oxygen atoms into the surface of the plastic member causes molecular cleavage of a plastic material on the surface of the plastic member (generation of a carboxylic acid such as acetic acid when the plastic contains polypropylene, etc.), and when an adhesive is applied to the plastic substrate having a surface in such a state and the resultant is evaluated by a shear test, the plastic substrate has interfacial fracture (interfacial fracture determined as a result of visual observation (seeing with the naked eye; the same applies hereinafter)).

When the interfacial fracture was more strictly observed with a transmission electron microscope (TEM), it was found that the interfacial fracture may involve material fracture in which a thin layer of the plastic substrate peels off from the surface of the plastic substrate. This observation is described below with reference to the accompanying drawings. The present invention is not limited to the accompanying drawings.

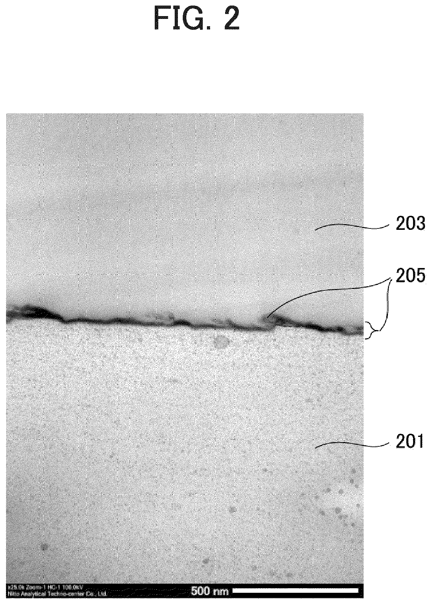

FIG. 2 is an image obtained by analyzing, with a TEM, a cross section of a first member that has been flame-treated under a condition (air-rich) shown in Comparative Example 1, enlarging and photographing the cross section at a magnification of 100,000 times.

In FIG. 2, a layer 205 can be observed on the surface of the first member 201 after the flame treatment. An embedding resin 203 was a resin used for preparing a TEM sample.

It is considered that the layer 205 corresponds to a skin layer in which resin components (mainly polypropylene) of the first member (#4) were ubiquitous on the surface of the first member (#4) after the flame treatment. The layer 205 had a thickness of 30 to 40 nm.

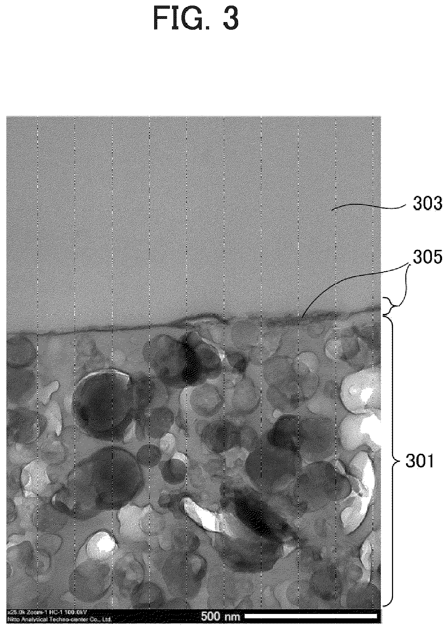

FIG. 3 is an image obtained by performing a shear test under Condition 2 of Comparative Example 1, then analyzing, with a TEM, a cross section of an adhesive layer of a portion visually evaluated as having undergone AF (interfacial fracture), and enlarging and photographing the cross section at a magnification of 100,000 times.

In FIG. 3, a layer 305 was observed on the surface of an adhesive layer 301. An embedding resin 303 was a resin used for preparing a TEM sample.

The layer 305 is considered to be the layer 205 (skin layer) of the first member in FIG. 2 that adhered with the adhesive and then peeled off together with the adhesive layer 301 in the shear test. The layer 305 had a thickness of about 30 nm.

As described above, it was confirmed that the portion visually evaluated as having undergone AF (interfacial fracture) may involve, in detail, material fracture of a thin layer on the surface of the first member.

As described above, although the fracture state after the shear test was AF as visually observed, the material fracture of the thin layer on the surface of the first member was observed when it was enlarged. This is considered to prove that the dry treatment under an air-rich condition makes the surface of the plastic member brittle. Since the brittle surface tends to easily peel off, it is considered that in the shear test, a thin portion of the brittle surface peeled off from the plastic member together with the adhesive, and as a result, the fracture state after the shear test was visually evaluated as AF, and the material fracture of the thin layer on the surface of the first member was observed in the observation by enlargement.

In the present invention, details of the analysis by the TEM are as follows.

(1) Preparation of TEM sample

The first member after the flame treatment or the shear test was embedded in a resin, and a sample thus obtained by embedding the first member was thinned to a thickness of about 100 to 200 $\mu$m by an ultrathin sectioning method (in a freezing atmosphere, -100°C) using an ultramicrotome, and heavy metal staining ($RuO_4$) was performed to obtain a thin piece (sample).

(2) TEM

TEM observation was performed using the thin piece prepared as described above. Details of the TEM analyzer and analysis conditions are as follows.

[Chemical Formula 1]

[TEM]

| | |
|---|---|
| • Device : | Hitachi, HT7820 |
| • Acceleration voltage : | 100 kV |

[FIB]

| | |
|---|---|
| • Device : | Hitachi, FB2200 |
| • Acceleration voltage : | 10, 40 kV |

[FE-TEM]

| | |
|---|---|
| • Device : | JE0L, JEM-2800 |
| • Acceleration voltage : | 200 kV |

On the other hand, in the flame treatment under a gas-rich condition or the like, nitrogen is more easily introduced into the surface of the plastic member than under an air-rich condition. It is considered that an increase in the introduction of nitrogen and a decrease in the introduction of oxygen under a gas-rich condition or the like are less likely to cause molecular cleavage of plastic molecules on the surface of the plastic member than excessive introduction of oxygen under an air-rich condition.

(Relationship between increase in wet tension caused by wetting reagent and adhesion properties)

Regarding the introduction of oxygen into the plastic substrate by the dry treatment, it is considered that when the introduction of oxygen is excessive or the introduction of nitrogen is small, the above situation can be effectively evaluated with the mixture solution (wetting reagent) specified in JIS K 6768: 1999. However, it is the view of the inventors of the present invention that the evaluation result obtained with the use of the mixture solution is not necessarily considered to lead to improvement in adhesion properties. In particular, when the wet tension after the dry treatment is much higher than that before the dry treatment, it is predicted that the introduction of oxygen into the plastic substrate is excessive.

On the other hand, it has been found that when much nitrogen or less oxygen is introduced into the plastic substrate by the dry treatment, it is difficult to find a surface state or a dry treatment condition that provides good adhesion properties based on the evaluation result of the JIS standard.

For example, the wet tension provided by a wetting reagent without surface treatment to a pure polypropylene-based member is generally about 28 to 30 mN/m. However, the inventors of the present invention have found in the present invention that a polypropylene-based member flame-treated under a gas-rich condition or the like does not react with a wetting reagent for evaluation of a wet tension of 40 mN/m or more (even when the wetting reagent is used, a liquid film of each wetting reagent is kept in a state of being applied without being broken for 2 seconds or more), but exhibits excellent adhesion properties. From this, the inventors of the present invention considered that the adhesion properties of the surface of the plastic substrate subjected to the dry treatment under a gas-rich condition or the like cannot be simply evaluated with use of a wetting reagent.

(Regarding complete combustion of combustion gas, air-rich state, and gas-rich state)

In the flame treatment, propane gas or natural gas containing methane as a main component is usually used as combustion gas.

The complete combustion reaction of propane is as follows.

$$C_3H_8 + 5O_2 \rightarrow 3CO_2 + 4H_2O$$

The volume ratio R (air/propane) of air to combustion gas (propane) when propane is completely combusted is 23.8/1 when the oxygen concentration in the air is assumed to be 81%.

From the above, for example, when an air flow rate (flow rate is an amount of flow per unit time; the same applies hereinafter) is set to 100 L/min, a propane flow rate is determined to be 4.20 L/min for completely combusting propane.

The complete combustion reaction of methane, which is the main component of natural gas, is as follows.

$$CH_4 + 2O_2 \rightarrow CO_2 + 2H_2O$$

The volume ratio R (air/natural gas) of air and combustion gas (natural gas) when natural gas is completely combusted is 9.2/1 when the oxygen concentration in the air is assumed to be 81%.

From the above, for example, when an air flow rate is set to 100 L/min, a natural gas flow rate is determined to be 10.87 L/min for completely combusting natural gas.

In the volume ratio $R_P$ (air/combustion gas) when the combustion gas is completely combusted, for example, if the air flow rate is fixed and the combustion gas flow rate is increased, the mixture gas of the air and the combustion gas is in a gas-rich (combustion gas-rich) state. The volume ratio $R_A$ (the volume ratio $R_A$ is a volume ratio of air/combustion gas during the flame treatment; the same applies to the volume ratio $R_A$ hereinafter) at this time is smaller than the volume ratio $R_P$, and the volume ratio $R_A$/volume ratio $R_P$ is smaller than 1.

In contrast, in the volume ratio $R_P$ (air/combustion gas), when the combustion gas flow rate is decreased, the mixture gas of the air and the combustion gas is in an air-rich state. The volume ratio $R_A$ at this time is larger than the volume ratio $R_P$, and the volume ratio $R_A$/volume ratio $R_P$ is larger than 1.

Hereinafter, the bonded article of the present invention is described.

[First member]

In the present invention, the first member is a member containing plastic. Incidentally, when the bonded article of the present invention is used as an automobile exterior member such as a back door of an automobile, the first member is preferably used as an inner member.

[Plastic]

The plastic preferably contains a crystalline thermoplastic resin. Examples of the plastic include polyolefin-based resins such as polyethylene, polypropylene, and polybutylene; methacrylic resin such as polymethyl methacrylate; polystyrene-based resin such as polystyrene, ABS, and AS; polyester-based resins such as polyethylene terephthalate (PET), polybutylene terephthalate (PBT), polytrimethylene terephthalate, polyethylene naphthalate (PEN), and poly 1,4-cyclohexyldimethylene terephthalate (PCT); polyamide resin selected from nylon resins and nylon copolymer resins such as polycaproamide (nylon 6), polyhexamethylene adipamide (nylon 66), polyhexamethylene sebacamide (nylon 610), polyhexamethylene dodecamide (nylon 612), polydodecanamide (nylon 12), polyhexamethylene terephthalamide (nylon 6T), polyhexamethylene isophthalamide (nylon 6I), polycaproamide/polyhexamethylene terephthalamide copolymer (nylon 6/6T), polyhexamethylene adipamide/polyhexamethylene terephthalamide copolymer (nylon 66/6T), and polyhexamethylene adipamide/polyhexamethylene isophthalamide copolymer (nylon 66/6I); polyvinyl chloride resin; polyoxymethylene (POM); polycarbonate (PC) resin; polyphenylene sulfide (PPS) resin; modified polyphenylene ether (PPE) resin; polyetherimide (PEI) resin; polysulfone (PSF) resin; polyethersulfone (PES) resin; polyketone resin; polyethernitrile (PEN) resin; polyetherketone (PEK) resin; polyetheretherketone (PEEK) resin; polyetherketoneketone (PEKK) resin; polyimide (PI) resin; polyamideimide (PAI) resin; fluorine resin; and modified resins obtained by modifying these resins, or mixtures of these resins.

With a view to achieving more excellent effects of the present invention, the first member preferably contains a polyolefin-based resin, more preferably contains polyethylene and/or polypropylene, and still more preferably contains polypropylene, as plastic.

With a view to achieving more excellent effects of the present invention, the content of plastic in the first member is preferably 10 to 100 mass% and more preferably 60 to 100 mass% with respect to the total amount of the first member.

(Inorganic substance)

As one of preferable aspects, the first member further contains an inorganic substance.

Examples of the inorganic substance include silica, titanium oxide, magnesium oxide, antimony oxide, aluminum hydroxide, magnesium hydroxide, calcium hydroxide, calcium carbonate, talc, clay, mica, glass fiber, carbon black, graphite, and carbon fiber.

With a view to achieving more excellent effects of the present invention, the inorganic substance preferably contains at least one selected from the group consisting of talc, carbon fiber, and glass fiber, more preferably contains talc, and still more preferably contains talc and glass fiber.

When the first member further contains an inorganic substance, the content of the inorganic substance in the first member is preferably 5 to 40 mass% with respect to the total amount of the first member, with a view to achieving more excellent effects of the present invention.

[Flame treatment]

Flame treatment is a type of dry treatment in which a member is surface-treated with flame.

In the present invention, the first member has a portion that has been flame-treated under the following condition A1 (also referred to as "specific condition").

(Condition A1) a volume ratio $R_{A1}$ of air and combustion gas used for the generation of flame in the flame treatment, and a volume ratio $R_p$ of air and combustion gas when the combustion gas is completely combusted satisfy the following formula (1):

$$0.8 \leq \text{volume ratio } R_{A1}/\text{volume ratio } R_P \leq 1 \dots (1)$$

(Combustion gas)

The combustion gas used for the flame treatment preferably contains propane gas or natural gas. In the present invention, the combustion gas does not contain oxygen in the atmosphere.

[Volume ratio $R_{A1}$]

In the present invention, the volume ratio $R_{A1}$ (air/combustion gas) of the air and the combustion gas used to generate flame in the flame treatment of the first member can be determined by the ratio of the air flow rate and the combustion gas flow rate (air flow rate/combustion gas flow rate).

When the combustion gas contains propane, the combustion gas flow rate is preferably 4.2 to 5.25 L/min, and more preferably 4.3 to 4.7 L/min when the air flow rate is 100 L/min, with a view to achieving more excellent effects of the present invention.

When the combustion gas contains natural gas, the combustion gas flow rate is preferably 11.0 to 13.5 L/min, and more preferably 11.4 to 12.0 L/min when the air flow rate is 100 L/min, with a view to achieving more excellent effects of the present invention.

[Volume ratio $R_p$]

In the present invention, the volume ratio $R_P$ of air and combustion gas when the combustion gas used to generate flame in the flame treatment of the first member is completely combusted can be determined as a calculated value.

When the combustion gas contains propane, the volume ratio $R_p$ (air/propane) of the air and the combustion gas (propane) upon complete combustion of propane is 23.8/1 when the oxygen concentration in the air is assumed to be 81%, as described above.

When the combustion gas contains natural gas (containing methane as a main component), the volume ratio $R_p$ (air/natural gas) of the air and the combustion gas (natural gas) upon complete combustion of natural gas is 9.2/1 when the oxygen concentration in the air is assumed to be 81%.

[Formula (1)]

In the present invention, the following formula (1) is satisfied.

$$0.8 \leq \text{volume ratio } R_{A1}/\text{volume ratio } R_P \leq 1 \ldots (1)$$

The volume ratio $R_{A1}$/volume ratio $R_P$ is preferably 0.85 to 0.95 with a view to achieving more excellent effects of the present invention.

(Other conditions of flame treatment)

▪ Flame treatment device

The flame treatment device is preferably a device capable of setting an air flow rate and a combustion gas flow rate during use.
The distance between (the tip end of) the burner of the flame treatment device and a member may be, for example, 10 to 100 mm.
In the flame treatment, one preferable aspect is to apply an oxidizing flame part of the flame to the surface of the member.
The speed of the burner of the flame treatment device, moved with respect to the member, may be, for example, 300 to 1000 mm/second.
The number of passes (the number of times the burner is swept) may be, for example, 1 to 5 times.
In the present invention, when the flame treatment is performed under a specific condition, excellent adhesion properties can be obtained and robustness is excellent even if conditions (for example, the above conditions) other than the specific condition in the flame treatment are set in wide ranges as described above.
The entire first member may be flame-treated, or a part thereof may be flame-treated.

(Wet tension)

As described above, in the present invention, it is not appropriate that the wet tension obtained according to JIS K 6768: 1999 on the surface of the first member that has been flame-treated under the predetermined condition A1 should be simply evaluated according to the general evaluation criteria (for example, the wet tension after the dry treatment is 40 mN/m or more, or 10 mN/m or more greater than the wet tension before the dry treatment). Hereinafter, the result of the flame treatment on the first member under the specific condition is similar to that when the flame treatment under the predetermined condition A2 is performed on the second member.
When the state of the surface of the flame-treated portion in the first member is confirmed by wet tension, the wet tension may be, for example, 38 mN/m or less. In the present invention, it has been found that the adhesion properties are excellent even when the wet tension of the portion of the first member that has been flame-treated under the above specific condition is 38 mN/m or less.
In addition, it has been found that the wet tension of the portion of the first member that has been flame-treated under the above specific conditions is preferably 32 to 38 mN/m and more preferably 32 to 35 mN/m with a view to achieving more excellent effects of the present invention.

(Difference in wet tension between before and after flame treatment)

The difference in a wet tension of the first member between before and after the flame treatment is preferably less than 10 mN/m and more preferably 8 mN/m or less with a view to achieving more excellent effects of the present invention.

(Introduction of nitrogen atom)

The analysis of the flame-treated portion of the first member by X-ray photoelectron spectroscopy (XPS) shows that the amount of nitrogen atoms in the portion is greater than the amount of nitrogen atoms on the surface of the first member before the flame treatment.
In addition, the amount of nitrogen atoms on the surface of the first member that has been flame-treated under the specific condition is greater than the amount of nitrogen atoms on the surface of the member that has been flame-treated under a condition other than the specific condition, which shows that the introduction of oxygen is appropriate.

In the present invention, it is presumed that when the flame treatment is performed under the specific condition, the amount of nitrogen atoms on the surface of the first member increases, embrittlement of the surface of the member due to excessive introduction of oxygen is suppressed, and as a result, adhesion properties are improved.

[Adhesion between first member and adhesive]

In the present invention, the first member is caused to adhere with an adhesive described later, at a portion thereof that has been flame-treated as described above.

The adhesion region in the first member may be the whole or a part of the flame-treated portion.

[Second member]

The bonded article of the present invention includes a second member. The second member is not particularly limited. Examples of the second member include those mentioned as examples of the first member. The same member as the first member can be used as the second member.

With a view to achieving more excellent effects of the present invention, the second member preferably contains plastic. The material of the second member can be similar to that of the first member.

With a view to achieving more excellent effects of the present invention, the second member preferably has a portion that has been flame-treated under the following condition A2.

(Condition A2) a volume ratio $R_{A2}$ of air and combustion gas used for the generation of flame in the flame treatment, and a volume ratio $R_P$ of air and combustion gas when the combustion gas is completely combusted satisfy the following formula (2):

$$0.8 \leq \text{volume ratio } R_{A2}/\text{volume ratio } R_P \leq 1 \ldots (2)$$

The condition A2 can be similar to the condition A1.

The second member preferably adheres with an adhesive described later, at a portion thereof that has been flame-treated as described above. The second member adheres with the adhesive at the flame-treated portion in the same manner as described for the first member.

[Adhesive]

The bonded article of the present invention includes an adhesive.

In the present invention, the adhesive bonds the first member and the second member.

With a view to achieving more excellent effects of the present invention, the adhesive is preferably a urethane-based adhesive, an epoxy-based adhesive, a modified silicone-based adhesive, or an acryl-based adhesive, and more preferably a urethane-based adhesive.

The urethane-based adhesive and the epoxy-based adhesive are preferably of a one-pack type or a two-pack type.

Examples of the one-pack-type urethane-based adhesive include moisture-curable adhesives containing a urethane prepolymer having an isocyanate group.

Examples of the two-pack-type urethane-based adhesive include an adhesive having a main agent containing a urethane prepolymer and a curing agent containing a polyol.

Examples of the one-pack-type epoxy-based adhesive include an ordinary-temperature-curable or heat-curable adhesive containing a latent curing agent such as ketimine, oxazolidine, or an aldimine-based compound, and a liquid epoxy resin.

Examples of the two-pack-type epoxy resin-based adhesive include an adhesive including a main agent selected from liquid epoxy resins (for example, bisphenol A type epoxy resin, bisphenol F type epoxy resin, bisphenol AD type epoxy resin, or novolac type epoxy resin) and a curing agent (for example, a nitrogen-containing aromatic amine curing agent such as a chain aliphatic amine, a cyclic aliphatic amine, an aromatic amine, or an imidazole compound; an amidoamine curing agent; or ketimine).

Examples of the modified silicone-based adhesive include an adhesive containing polyoxyalkylene having a hydrolyzable silyl group.

[Primer]

In the present invention, no primer is interposed between the first member and the adhesive. That is, the first member and the adhesive can adhere with each other directly.

A primer may be interposed between the second member and the adhesive. When the second member has a portion that has been flame-treated under the condition A2, it is preferable that no primer is interposed between the second member and the adhesive.

(Application)

Examples of applications of the bonded article of the present invention include interior/exterior members of automobiles such as a body, a front door, a rear door, a back door, a front bumper, a rear bumper, and a rocker molding of an automobile.

[Method for producing bonded article of the present invention]

Examples of the method for producing a bonded article of the present invention include the following production methods.

The method for producing a bonded article of the present invention (the production method of the present invention) includes:

a surface treatment step of flame-treating a first member containing plastic under the following condition A1;
an adhesive application step of applying an adhesive to the flame-treated first member without a primer interposed therebetween; and
a bonding step of laminating the second member on the adhesive, and bonding the first member, the adhesive, and the second member.

(Condition A1) a volume ratio $R_{A1}$ of air and combustion gas used for the generation of flame in the flame treatment, and a volume ratio $R_P$ of air and combustion gas when the combustion gas is completely combusted satisfy the following formula (1):

$$0.8 \leq \text{volume ratio } R_{A1}/\text{volume ratio } R_P \leq 1 \ldots (1)$$

In the method for producing a bonded article of the present invention, the first member, the second member, the adhesive, the flame treatment, the condition A1, the condition A2, and the like are the same as those of the bonded article of the present invention.

[Surface treatment step]

In the present invention, the surface treatment step is a step of flame-treating the first member containing plastic under the above condition A1.

The first member used in the surface treatment step is a first member containing plastic (first member before flame treatment).

[Adhesive application step]

In the present invention, the adhesive application step is a step of applying an adhesive to the first member that has been flame-treated in the surface treatment step without a primer interposed therebetween.

(Method of applying adhesive)

The method for applying the adhesive to the flame-treated first member is not particularly limited. Examples thereof include a dip coating method; a coating method using a double roll coater, a slit coater, an air knife coater, a wire bar coater, a slide hopper, a spray coating, a blade coater, a doctor coater, a squeeze coater, a reverse roll coater, a transfer roll coater, an extrusion coater, a curtain coater, a dip coater, a die coater, or a gravure roll; a screen printing method; a dip coating method; a spray coating method; a spin coating method; and an inkjet method.

[Bonding step]

In the present invention, the bonding step is a step of laminating the second member on the adhesive and bonding the first member, the adhesive, and the second member.

In the bonding step, a method for laminating the second member on the adhesive is not particularly limited.

After the second member is laminated on the adhesive, it may be pressure-bonded.

In order to cure the adhesive, after the second member is laminated, it may be left under room temperature conditions (for example, about 15 to 30 °C) for curing.

In order to cure the adhesive, heating or the like may be performed after the second member is laminated.

With a view to achieving more excellent effects of the present invention, it is preferable that the second member contains plastic, and the method includes:

a surface treatment step of flame-treating the second member under the following condition A2 in advance before the bonding step,

wherein, in the bonding step, the flame-treated second member is laminated on the adhesive. The same member as the first member can be used as the second member.

(Condition A2) a volume ratio $R_{A2}$ of air and combustion gas used for the generation of flame in the flame treatment, and a volume ratio $R_P$ of air and combustion gas when the combustion gas is completely combusted satisfy the following formula (2):

$$0.8 \leq \text{volume ratio } R_{A2}/\text{volume ratio } R_P \leq 1 \; ... \; (2)$$

The production method of the present invention is described with reference to the drawings.

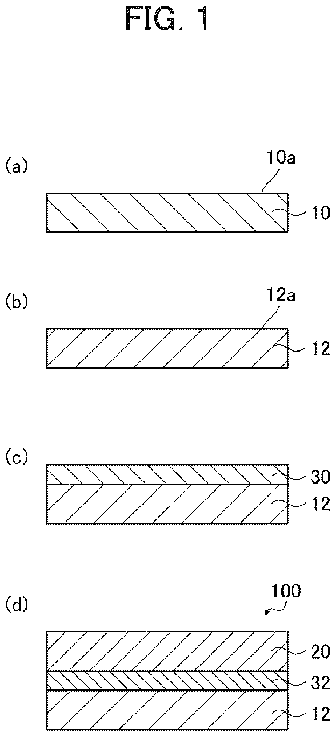

FIGS. 1A to 1D are schematic cross-sectional views showing one embodiment of a production method of the present invention in order of steps.

FIG. 1A shows a first member 10 used in the surface treatment step.

First, in the surface treatment step, a surface 10a of the first member 10 is flame-treated under the specific condition. A first member 12 after flame treatment is obtained (FIG. 1B).

Next, in the adhesive application step, an adhesive 30 is applied to a flame-treated surface 12a of the first member 12 after the flame treatment, without a primer interposed therebetween (FIG. 1C).

Further, in the bonding step, a second member 20 is laminated on the adhesive 30. A bonded article 100 in which an adhesive 32 (a layer of the cured adhesive 30) bonds the first member 12 and the second member 20 with each other is obtained (FIG. 1D).

EXAMPLES

Hereinafter, the present invention is specifically described with reference to Examples. However, the present invention is not limited to Examples.

<Preparation of adhesive>

Components in Table 1 shown below were mixed in a formulation (part(s) by mass) shown in the same table using a stirrer to prepare the main agent shown in the upper part of the same table and the curing agent shown in the lower part of the same table.

Next, 100 g of the prepared main agent and 10 g of the curing agent were mixed, whereby adhesives 1 and 2 were obtained.

The adhesive 1 is a urethane-based adhesive, and the adhesive 2 is an epoxy-based and modified silicone-based adhesive.

[Table 1]

| Table 1 | | Adhesive 1 | Adhesive 2 |
|---|---|---|---|
| Main agent | Polymer 1 | 42.4 | |
| | Polymer 2 | | 29.9 |
| | Epoxy resin 1 | | 2.8 |
| | Epoxy resin 2 | | 11.4 |
| | Compound 1 | 1.7 | |
| | Compound 2 | 0.3 | |
| | Carbon black | 20.6 | 3.3 |
| | Calcium carbonate 1 | 19.3 | 7.9 |
| | Calcium carbonate 2 | | 41.5 |
| | Plasticizer 1 | 15.5 | |
| | Plasticizer 2 | | 3.1 |
| | Catalyst 1 | 0.2 | |
| | Total | 100.0 | 100.0 |
| Curing agent | Compound 3 | 45.9 | 9.8 |
| | Compound 4 | 5.0 | |
| | Compound 5 | 2 | |
| | Compound 6 | | 5.2 |
| | Compound 7 | | 2.5 |
| | Compound 8 | | 31.3 |
| | Calcium carbonate 2 | 46.8 | 46.0 |
| | Catalyst 1 | 0.3 | |
| | Catalyst 2 | | 5.2 |
| | Total | 100.0 | 100.0 |
| Main agent/curing agent (mass ratio) | | 10/1 | 10/1 |

Details of each component in Table 1 are as follows.

(Main agent)

- Polymer 1: urethane prepolymer synthesized as follows:
Polyoxypropylene diol (average molecular weight: 2000), 700 g, polyoxypropylene triol (average molecular weight 3000), 300 g, and 4,4'-diisocyanate phenylmethane (molecular weight: 250), 499 g were mixed (NCO/OH = 2.0 at this time), and diisononyl phthalate, 500 g, was further added, and the mixture was stirred at 80°C for 12 hours in a nitrogen stream and reacted to synthesize a urethane prepolymer (polymer 1) containing 2.10 % of isocyanate groups.
- Polymer 2: modified silicone resin having a main chain of polyoxypropylene and having a methyldimethoxysilyl group as a hydrolyzable silyl group at a terminal. KANEKA MS POLYMER S203 (manufactured by Kaneka Corporation)
- Epoxy resin 1: ADEKA RESIN EP-4100 (manufactured by ADEKA CORPORATION)
- Epoxy resin 2: ADEKA RESIN EP-4006 (manufactured by ADEKA CORPORATION)
- Compound 1: isocyanurate product of hexamethylene diisocyanate (Tolonate HDT, manufactured by Perstorp)
- Compound 2: Daimaron (YASUHARA CHEMICAL CO., LTD.)

14

- Carbon black: #200MP (manufactured by Nippon Steel Chemical Carbon Co., Ltd. (now NIPPON STEEL Carbon Co., Ltd.))
- Calcium carbonate 1: SUPER S (manufactured by Maruo Calcium Co., Ltd.)
- Calcium carbonate 2: KALFAIN 200 (manufactured by Maruo Calcium Co., Ltd.)
- Plasticizer 1: diisononyl phthalate (manufactured by J-PLUS Co., Ltd.)
- Plasticizer 2: Shellsol TM (manufactured by Japan Chemtech Ltd. (now Oxalis Chemicals Ltd.))
- Catalyst 1: dimorpholino diethyl ether (manufactured by San-Apro Ltd.)

(Curing agent)

- Compound 3: trifunctional polypropylene polyol (EXCENOL 1030, manufactured by Asahi Glass Co., Ltd.)
- Compound 4: polybutadiene diol (Poly bd R-45 HT, manufactured by Idemitsu Kosan Co., Ltd., hydroxyl value: 0.8 mol/kg)
- Compound 5: terpineol (YASUHARA CHEMICAL CO., LTD.)
- Compound 6: 3-glycidoxypropyltrimethoxysilane Sila-Ace S-510 (manufactured by CHISSO CORPORATION (now JNC Corporation))
- Compound 7: vinyltrimethoxysilane KBM 1003 (manufactured by Shin-Etsu Chemical Co., Ltd.)
- Compound 8: ketimine type latent curing agent EPIKURE H-30 (manufactured by Mitsubishi Chemical Corporation)
- Calcium carbonate 2: KALFAIN 200 (manufactured by Maruo Calcium Co., Ltd.)
- Catalyst 1: dimorpholino diethyl ether (manufactured by San-Apro Ltd.)
- Catalyst 2: tin-based catalyst NEOSTANN U-303 (manufactured by Nitto Kasei Co., Ltd.)

<Member>

The first member and the second member used in Examples are indicated as "#*/#*" in the "Member" column of Table 2. The first "#*" in "#*/#*" indicates the number of the member used as the first member. The second "#*" indicates the number of the member used as the second member.

Details of each of the members #4 to #7 are as follows. Hereinafter, "GF" means glass fiber.

- Member #4: PP-GF40-0453 manufactured by Celanese Corporation. A composite material containing at least polypropylene, talc, and a glass fiber. The member #4 was black. The content of the glass fiber was 40 mass% in the total amount of the composite material. The wet tension before flame treatment was 30 mN/m.
- Member #5: PP-GF40-0453 manufactured by Celanese Corporation. A composite material containing at least polypropylene, talc, and a glass fiber. The member #5 was gray. The content of the glass fiber was 40 mass% in the total amount of the composite material. The wet tension before flame treatment was 30 mN/m.
- Member #6: member made of talc-containing PP (talc-containing polypropylene). TYC 1235X manufactured by Lyondell Basell Hifax was molded to obtain the member. The wet tension before flame treatment was 28 mN/m.
- Member #7: member made of CFRTP (carbon fiber reinforced thermoplastic resin). CFRTP manufactured by Toyobo Co., Ltd., product name: CTT (carbon fiber content: 50 vol%, fiber direction: in-plane random, matrix resin: polypropylene) was molded to obtain the member. The wet tension before flame treatment was 30 mN/m.

<<Manufacture of bonded article>>

<Surface treatment step>

(Presence or absence of member and flame treatment)

A first member (width: 25 mm, length: 75 mm, thickness: 3 mm) and a second member (width: 25 mm, length: 75 mm, thickness: 3 mm) shown in the column of "Member" in Table 2 were prepared.

In the "Presence or absence of flame treatment on each member" column of Table 2, whether the first member and the second member were flame-treated is shown.

(Conditions A1 and A2 for flame treatment)

One surface of the first member was flame-treated under the conditions shown in the column of "Conditions A1 and A2 for flame treatment" in Table 2. The second member was also flame-treated under the same conditions. Details of each condition for the flame treatment are as follows.

- Combustion gas used in conditions A1 and A2: propane gas (assumed to be 100% propane).
- Flame treatment device 1 used under the condition A1 and the condition A2 (capable of adjusting flow rates of combustion gas and air)
  - Flame treatment device 1: FTS 201 manufactured by Arcogas GmbH. Flame treatment device 1 was capable of adjusting flow rates of combustion gas and air. The air flow rate was fixed at 100 L/min, and the combustion gas flow rate was adjusted as follows.
    - Gas-rich condition (Example)

When the flame treatment device 1 was used in the flame treatment, the air flow rate was set to 100 L/min, and the combustion gas (propane) flow rate was set to 4.6 L/min. The volume ratio $R_{A1}$ (air/propane) at this time was 21.7/1, and the volume ratio $R_P$ (air/propane) in the complete combustion reaction of propane was 23.8/1, which resulted in that the volume ratio $R_{A1}$/the volume ratio $R_P$ = 0.91. The volume ratio $R_{A2}$, and the volume ratio $R_{A2}$/volume ratio $R_P$ are the same as the volume ratio $R_{A1}$, and the volume ratio $R_{A1}$/volume ratio $R_P$, respectively.

- - Air-rich condition (Comparative Example)

When the flame treatment device 1 was used in the flame treatment, the air flow rate was set to 100 L/min, and the combustion gas (propane) flow rate was set to 3.7 L/min. The volume ratio $R_{A1}$ (air/propane) at this time was 27.0/1, and the volume ratio $R_P$ (air/propane) in the complete combustion reaction of propane was 23.8/1, which resulted in the volume ratio $R_{A1}$/the volume ratio $R_P$ = 1.14. The volume ratio $R_{A2}$, and the volume ratio $R_{A2}$/volume ratio $R_P$ are the same as those described above.

- Flame treatment devices 2 and 3 used under the condition A1 and the condition A2 (capable of adjusting the combustion gas flow rate)

Although the flame treatment devices 2 and 3 can adjust the combustion gas flow rate, the air flow rate is unknown and cannot be adjusted. When the flame treatment device 2 and 3 are used, the air/gas ratio depending on the air flow rate cannot be adjusted.

- - Flame treatment device 2: a device obtained by attaching a cylinder (Prince gas torch cylinder GT-5000, manufactured by Prince Gas Company; the same applies hereinafter) to a regulator (manufactured by Time Auto Machine Co., Ltd.) capable of adjusting a pressure (fuel gas pressure). The gas pressure was 2 MPa. The burner had a circular tip having an inner diameter of 6 mm.
  - Flame treatment device 3: a device obtained by attaching a cylinder (similar to GT-5000 described above) to a regulator capable of adjusting gas pressure (similar to the above). The gas pressure was 0.04 MPa. The tip of the burner had a fan shape, and its arc had a width of 25 mm and a central angle of 135°.
- Distance between the burner and member of the flame treatment device under the conditions A1 and A2: selected from 20 to 50 mm
- Speed at which the burner of the flame treatment device was moved: selected from 400 to 800 mm/sec
- Common matters in the conditions A1 and A2

In both of Examples of the present invention and Comparative Examples, an oxidizing flame part of the flame was applied to the surface of the member in the flame treatment. The number of passes of the flame treatment device (the number of times the burner was swept) was set to one.

- - Wet tension of each member after flame treatment: a wet tension was measured according to JIS K 6768: 1999 using a mixture solution for a wet tension test manufactured by FUJIFILM Wako Pure Chemical Corporation as a wetting reagent.

(Adhesive application step)

Next, any one of the adhesives 1 and 2 described in the "Adhesive" column in Table 2 was applied directly to the flame-treated surface of the first member (See Table 1 for adhesives 1 and 2). No primer was used in the adhesive application step.

(Bonding step)

The flame-treated portion of the second member was laminated onto the adhesive so that the first member and the second member formed a single lap joint, and the resultant was pressure-bonded and cured in an environment of 23°C and a relative humidity of 50% for 3 days to obtain a bonded article (test specimen) in which the first member and the second member were bonded with the adhesive (thickness: 1.5 mm). The adhesion region was 25mm × 25mm.

<Evaluation of bonded state>

■ Shear test

For each of the bonded articles produced as described above (the number of samples of each type was five), a shear test (tensile speed: 5.1 cm/min) was performed on each of the bonded articles in accordance with JIS K 6850-1999 under the following conditions, the shear strength was measured, and the fracture state of each of the bonded articles and the proportion (indicated by %) of the area thereof were visually observed. The results of the average shear strength, the minimum shear strength, and the average fracture state visually observed are shown in Table 2.

(Conditions for shear test)

Condition 1: a shear test was performed under heating conditions (121°C).
Condition 2: a shear test was performed at room temperature (23 °C, 60% RH) after thermal aging (being placed in air at 80°C for 250 hours).
Condition 3: After an environmental test (a cycle of 16 hours at - 30°C and then 8 hours at 80°C was taken as one cycle, and this cycle was repeated 10 times), a shear test was performed under room temperature conditions (23°C, 60% RH).

(Fracture state)

■ CF: cohesive failure of adhesive
■ AF: interfacial fracture between an adhesive and a member (as described above, AF by visual observation may involve material fracture of a thin layer of a member that cannot be visually confirmed, but the results of the average fracture state shown in Table 2 are observation results by visual observation.)
■ SF: material fracture of a member at a portion thereof adhering with an adhesive (including at least material failure of a thin layer of a member that can be visually confirmed), among material failure
■ SF-FMB: material fracture of a member at a portion thereof away from a portion adhering with an adhesive, among material fracture

The numerical value after the alphabet symbol indicating the fracture state indicates the proportion (%) of the area occupied by each fracture state in the adhesion region.

■ Evaluation of bonded state

In the present invention, when the total of the area occupied by CF and the area occupied by SF and SF-FMB was 100% (that is, there was no AF) in all the evaluation results of the shear tests under the conditions 1 to 3, it was evaluated that the bonded state was excellent.
When there was no AF in all of the evaluation results of the shear tests under the conditions 1 to 3 and the following condition was satisfied, it was evaluated that the bonded state was more excellent:
Satisfying at least one of the following:

having an average shear strength under the condition 1 of 1.0 MPa or more;
having an average shear strength under the condition 2 of 3.0 MPa or more (or 4.0 MPa or more); and
having an average shear strength under the condition 3 of 3.0 MPa or more (or 4.0 MPa or more).

On the other hand, when AF was present in any of the evaluation results of the shear test under the conditions 1 to 3, it was evaluated that the bonded state was poor.

[Table 2-1]

| Table 2 | | Example 1 | Comparative Example 1 | Comparative Example 2 | Comparative Example 3 |
|---|---|---|---|---|---|
| Member | Members used in each Example ▪ Comparative Example First member/ Second member | #4/#4 | | ← | ← |
| Presence or absence of flame treatment on each member | | Both first and second members flame-treated | | ← | ← |
| Conditions A1 and A2 for flame treatment | Combustion gas used under conditions A1 and A2 | Propane gas (Volume ratio $R_P$ of air and propane gas when the propane gas is completely combusted is 23.8/1) | | | |
| | Flame treatment device used under conditions A1 and A2 | Flame treatment device 1 | Flame treatment device 1 | Flame treatment device 2 Gas pressure 2MPa | Flame treatment device 3 Gas pressure 0.04MPa |
| | Volume ratio $R_{A1}$ and volume ratio $R_{A2}$ | 21.7/1 (gas rich) | 27.0/1 (air rich) | | |
| | Volume ratio $R_{A1}$ /Volume ratio $R_P$ and Volume ratio $R_{A2}$/Volume ratio $R_P$ | 0.91 | 1.14 | - | - |
| | Distance between burner of flame treatment device and member under conditions A1 and A2 (mm) | 30 | 30 | 50 | 20 |
| | Speed at which the burner of the flame treatment device was moved under conditions A1 and A2 (mm/sec) | 800 | 800 | 400 | 400 |
| | Wet tension of each member after flame treatment (mN/m) | 32 | 56 | 65 | 65 |
| Adhesive | | Adhesive 1 | Adhesive 1 | Adhesive 1 | Adhesive 1 |
| Conditions for shear test (adhesion region) | Result of shear test | Example 1 | Comparative Example 1 | Comparative Example 2 | Comparative Example 3 |
| Condition 1. under heating conditions (121°C) (25 mm × 25 mm) | Average shear strength (MPa) | 1.24 | 0.64 | 0.72 | 0.81 |
| | Minimum shear strength (MPa) | 0.94 | 0.59 | 0.48 | 0.51 |
| | Average fracture state | CF100 | CF2 AF98 | CF10 AF90 | CF10 AF90 |
| Condition 2. at room temperature after thermal aging (25 mm × 25 mm) | Average shear strength (MPa) | 4.28 | 2.67 | 2.54 | 2.61 |
| | Minimum shear strength (MPa) | 3.91 | 2.24 | 1.98 | 2.10 |
| | Average fracture state | CF33 SF-FMB67 | CF7 AF93 | CF20 AF80 | CF30 AF70 |

(continued)

| Conditions for shear test (adhesion region) | Result of shear test | Example 1 | Comparative Example 1 | Comparative Example 2 | Comparative Example 3 |
|---|---|---|---|---|---|
| Condition 3. at room temperature after environment al test (25 mm × 25 mm) | Average shear strength (MPa) | 4.12 | 2.67 | 2.60 | 2.65 |
| | Minimum shear strength (MPa) | 4.08 | 2.33 | 2.01 | 2.22 |
| | Average fracture state | SF-FMB100 | CF64 AF36 | CF50 AF50 | CF50 AF50 |

[Table 2-II]

| Table 2 | | Example 2 | Comparative Example 4 | Comparative Example 5 | Example 3 | Comparative Example 6 |
|---|---|---|---|---|---|---|
| Member | Members used in each Example ▪ Comparative Example First member/Second member | #5/#5 | | ← | #4/#4 | |
| Presence or absence of flame treatment on each member | | Both first and second members flame-treated | ← | ← | ← | |
| Conditions A1 and A2 for flame treatment | Combustion gas used under conditions A1 and A2 | Propane gas (Volume ratio $R_P$ of air and propane gas when the propane gas is completely combusted is 23.8/1) | | | | |
| | Flame treatment device used under conditions A1 and A2 | Flame treatment device 1 | Flame treatment device 1 | Flame treatment device 3 Gas pressure 0.04 MPa | Flame treatmen t device 1 | Flame treatmen t device 1 |
| | Volume ratio $R_{A1}$ and volume ratio $R_{A2}$ | 21.7/1 (gas rich) | 27.0/1 (air rich) | - | 21.7/1 (gas rich) | 27.0/1 (air rich) |
| | Volume ratio $R_{A1}$/Volume ratio $R_P$ and Volume ratio $R_{A2}$/Volume ratio $R_P$ | 0.91 | 1.14 | - | 0.91 | 1.14 |
| | Distance between burner of flame treatment device and member under conditions A1 and A2 (mm) | 30 | 30 | 20 | 30 | 30 |
| | Speed at which the burner of the flame treatment device was moved under conditions A1 and A2 (mm/sec) | 800 | 800 | 400 | 800 | 800 |
| | Wet tension of each member after flame treatment (mN/m) | 32 | 56 | 65 | 32 | 56 |
| Adhesive | | Adhesive 1 | Adhesive 1 | Adhesive 1 | Adhesive 2 | Adhesive 2 |

(continued)

| Conditions for shear test (adhesion region) | Result of shear test | Example 2 | Comparative Example 4 | Comparative Example 5 | Example 3 | Comparative Example 6 |
|---|---|---|---|---|---|---|
| Condition 1. under heating conditions (121°C) (25 mm × 25 mm) | Average shear strength (MPa) | 1.44 | 0.96 | 0.90 | 1.23 | 0.86 |
| | Minimum shear strength (MPa) | 1.39 | 0.86 | 0.72 | 1.19 | 0.68 |
| | Average fracture state | CF100 | CF30 AF70 | CF25 AF75 | CF100 | CF90 AF10 |
| Condition 2. at room temperature after thermal aging (25 mm × 25 mm) | Average shear strength (MPa) | 3.39 | 2.97 | 2.78 | 3.15 | 2.81 |
| | Minimum shear strength (MPa) | 3.22 | 2.92 | 2.54 | 3.08 | 2.67 |
| | Average fracture state | SF-FMB100 | SF-FMB100 | CF10 AF10 SF-FMB80 | CF100 | CF80 AF20 |
| Condition 3. at room temperature after environmental test (25 mm × 25 mm) | Average shear strength (MPa) | 3.35 | 2.95 | 2.89 | 3.38 | 2.97 |
| | Minimum shear strength (MPa) | 3.28 | 2.67 | 2.67 | 3.11 | 2.59 |
| | Average fracture state | SF-FMB100 | CF37 AF23 SF-FMB40 | CF60 AF20 SF-FMB20 | CF100 | CF80 AF20 |

[Table 3-1]

| Table 2· (Continued) | | Comparative Example 7 | Comparative Example 8 |
|---|---|---|---|
| Member | Members used in each Example·Comparative Example First member/Second member | #4/#4 | |
| Presence or absence of flame treatment on each member | | Both first and second members flame-treated | |
| Conditions A1 and A2 for flame treatment | Combustion gas used under conditions A1 and A2 | Propane gas | Propane gas |
| | Flame treatment device used under conditions A1 and A2 | Flame treatment device 2 Gas pressure 2 MPa | Flame treatment device 3 Gas pressure 0.04 MPa |
| | Volume ratio $R_{A1}$ and Volume ratio $R_{A2}$ | - | - |
| | Volume ratio $R_{A1}$/Volume ratio $R_P$ and Volume ratio $R_{A2}$/Volume ratio $R_P$ | - | - |
| | Distance between burner of flame treatment device and member under conditions A1 and A2 (mm) | 30 | 30 |
| | Speed at which the burner of the flame treatment device was moved under conditions A1 and A2 (mm/sec) | 800 | 800 |
| | Wet tension of each member after flame treatment (mN/m) | 65.00 | 58.00 |
| Adhesive | | Adhesive 1 | Adhesive 1 |
| Conditions for shear test (adhesion region) | Result of shear test | Comparative Example 7 | Comparative Example 8 |
| Condition 1. under heating conditions (121°C) (25 mm × 25 mm) | Average shear strength (MPa) | 0.64 | 0.81 |
| | Minimum shear strength (MPa) | 0.59 | 0.70 |
| | Average fracture state | CF10 AF90 | AF10 CF90 |
| Condition 2. at room temperature after thermal aging (25 mm × 25 mm) | Average shear strength (MPa) | 3.88 | 3.51 |
| | Minimum shear strength (MPa) | 3.05 | 3.11 |
| | Average fracture state | CF100 | CF100 |
| Condition 3. at room temperature after environmental test (25 mm × 25 mm) | Average shear strength (MPa) | 4.23 | 3.99 |
| | Minimum shear strength (MPa) | 3.79 | 3.59 |
| | Average fracture state | SF-FMB100 | SF-FMB100 |

[Table 3-II]

| Table 2· (Continued) | | Example 4 | Comparative Example 9 | Example 5 | Comparative Example 10 |
|---|---|---|---|---|---|
| Member | Members used in each Example·Comparative Example First member/ Second member | #6/#6 | | #7/#7 | |
| Presence or absence of flame treatment on each member | | Both first and second members flame-treated | | Both first and second members flame-treated | |
| Conditions A1 and A2 for flame treat - ment | Combustion gas used under conditions A1 and A2 | Propane gas | Propane gas | Propane gas | Propane gas |
| | Flame treatment device used under conditions A1 and A2 | Flame treatment device 1 | Flame treatment device 1 | Flame treatment device 1 | Flame treatment device 1 |
| | Volume ratio $R_{A1}$ and Volume ratio $R_{A2}$ | 21.7/1 (gas rich) | 27.0/1 (air rich) | 21.7/1 (gas rich) | 27.0/1 (air rich) |
| | Volume ratio $R_{A1}$/Volume ratio $R_P$ and Volume ratio $R_{A2}$/Volume ratio $R_P$ | 0.91 | 1.14 | 0.91 | 1.14 |
| | Distance between burner of flame treatment device and member under conditions A1 and A2 (mm) | 30 | 30 | 30 | 30 |
| | Speed at which the burner of the flame treatment device was moved under conditions A1 and A2 (mm/sec) | 800 | 800 | 800 | 800 |
| | Wet tension of each member after flame treatment (mN/m) | 32.00 | 58.00 | 32.00 | 52.00 |
| Adhesive | | Adhesive 1 | Adhesive 1 | Adhesive 1 | Adhesive 1 |
| Conditions for shear test (adhesion region) | Result of shear test | Example 4 | Comparative Example 9 | Example 5 | Comparative Example 10 |
| Condition 1. under heating conditions (121°C) (25 mm × 25 mm) | Average shear strength (MPa) | 0.53 | 0.38 | 1.27 | 1.01 |
| | Minimum shear strength (MPa) | 0.44 | 0.46 | 1.16 | 0.79 |
| | Average fracture state | SF-FMB33 | AF33 SF67 | CF100 | CF50 AF50 |
| Condition 2. at room temperature after thermal aging (25 mm × 25 mm) | Average shear strength (MPa) | 2.22 | 1.86 | 3.70 | 3.38 |
| | Minimum shear strength (MPa) | 2.17 | 1.65 | 3.59 | 3.04 |
| | Average fracture state | SF-FMB100 | SF-FMB33 SF57 AF10 | CF100 | CF100 |

(continued)

| Conditions for shear test (adhesion region) | Result of shear test | Example 4 | Comparative Example 9 | Example 5 | Comparative Example 10 |
|---|---|---|---|---|---|
| Condition 3. at room temperature after environmental test (25 mm × 25 mm) | Average shear strength (MPa) | 2.33 | 2.12 | 3.45 | 2.75 |
| | Minimum shear strength (MPa) | 2.32 | 1.89 | 2.47 | 1.99 |
| | Average fracture state | SF-FMB100 | SF-FMB100 | CF100 | CF33 AF33 CF34 |

[Table 4-1]

| Table 2· (Continued) | | Example 6 | Example 7 | Example 8 | Example 9 |
|---|---|---|---|---|---|
| Member | Members used in each Example·Comparative Example First member/Second member | #4/#4 | | | |
| Presence or absence of flame treatment on each member | | Both first and second members flame-treated | | | |
| Conditions A1 and A2 for flame treat - ment | Combustion gas used under conditions A1 and A2 | Propane gas | Propane gas | Propane gas | Propane gas |
| | Flame treatment device used under conditions A1 and A2 | Flame treatment device 1 | Flame treatment device 1 | Flame treatment device 1 | Flame treatment device 1 |
| | Volume ratio $R_{A1}$ and Volume ratio $R_{A2}$ | 21.7/1 (gas rich) | 21.7/1 (gas rich) | 21.7/1 (gas rich) | 21.7/1 (gas rich) |
| | Volume ratio $R_{A1}$/Volume ratio $R_P$ and Volume ratio $R_{A2}$/Volume ratio $R_P$ | 0.91 | 0.91 | 0.91 | 0.91 |
| | Distance between burner of flame treatment device and member under conditions A1 and A2 (mm) | 30 | 30 | 15.00 | 60.00 |
| | Speed at which the burner of the flame treatment device was moved under conditions A1 and A2 (mm/sec) | 400.00 | 1000.00 | 800 | 800 |
| | Wet tension of each member after flame treatment (mN/m) | 32.00 | 32.00 | 34.00 | 32.00 |
| Adhesive | | Adhesive 1 | Adhesive 1 | Adhesive 1 | Adhesive 1 |
| Conditions for shear test (adhesion region) | Result of shear test | Example 6 | Example 7 | Example 8 | Example 9 |
| Condition 1. under heating conditions (121°C) (25 mm × 25 mm) | Average shear strength (MPa) | 1.41 | 1.21 | 1.23 | 1.30 |
| | Minimum shear strength (MPa) | 1.15 | 1.13 | 1.16 | 1.19 |
| | Average fracture state | CF100 | CF100 | CF100 | CF100 |
| Condition 2. at room temperature after thermal aging (25 mm × 25 mm) | Average shear strength (MPa) | 3.59 | 4.06 | 3.99 | 4.24 |
| | Minimum shear strength (MPa) | 3.22 | 3.71 | 3.56 | 3.51 |
| | Average fracture state | SF-FMB100 | CF33 SF-FMB67 | SF-FMB100 | CF33 SF-FMB67 |

(continued)

| Conditions for shear test (adhesion region) | Result of shear test | Example 6 | Example 7 | Example 8 | Example 9 |
|---|---|---|---|---|---|
| Condition 3. at room temperature after environmental test (25 mm × 25 mm) | Average shear strength (MPa) | 4.11 | 4.29 | 4.38 | 4.21 |
| | Minimum shear strength (MPa) | 3.45 | 3.14 | 3.71 | 3.49 |
| | Average fracture state | SF-FMB100 | SF-FMB100 | CF33 SF-FMB 67 | CF33 SF-FMB 67 |

[Table 4-II]

| Table 2· (Continued) | | Example 10 | Example 11 | Example 12 | Example 13 |
|---|---|---|---|---|---|
| Member | Members used in each Example·Comparative Example First member/Second member | #4/#4 | | | |
| Presence or absence of flame treatment on each member | | Both first and second members flame-treated | | | |
| Conditions A1 and A2 for flame treat - ment | Combustion gas used under conditions A1 and A2 | Propane gas | Propane gas | Propane gas | Propane gas |
| | Flame treatment device used under conditions A1 and A2 | Flame treatment device 1 | Flame treatment device 1 | Flame treatment device 1 | Flame treatment device 1 |
| | Volume ratio $R_{A1}$ and Volume ratio $R_{A2}$ | 21.7/1 (gas rich) | 21.7/1 (gas rich) | 21.7/1 (gas rich) | 21.7/1 (gas rich) |
| | Volume ratio $R_{A1}$/Volume ratio $R_P$ and Volume ratio $R_{A2}$/Volume ratio Rp | 0.91 | 0.91 | 0.91 | 0.91 |
| | Distance between burner of flame treatment device and member under conditions A1 and A2 (mm) | 15.00 | 15.00 | 60.00 | 60.00 |
| | Speed at which the burner of the flame treatment device was moved under conditions A1 and A2 (mm/sec) | 400.00 | 1000.00 | 400.00 | 1000.00 |
| | Wet tension of each member after flame treatment (mN/m) | 36.00 | 34.00 | 32.00 | 32.00 |
| Adhesive | | Adhesive 1 | Adhesive 1 | Adhesive 1 | Adhesive 1 |
| Conditions for shear test (adhesion region) | Result of shear test | Example 10 | Example 11 | Example 12 | Example 13 |
| Condition 1. under heating conditions (121°C) (25 mm × 25 mm) | Average shear strength (MPa) | 1.26 | 1.19 | 1.24 | 1.19 |
| | Minimum shear strength (MPa) | 1.11 | 1.13 | 1.09 | 1.11 |
| | Average fracture state | CF100 | CF100 | CF100 | CF100 |
| Condition 2. at room temperature after thermal aging (25 mm × 25 mm) | Average shear strength (MPa) | 4.12 | 4.03 | 4.11 | 3.98 |
| | strength (MPa) | 3.08 | 3.76 | 3.61 | 3.55 |
| | Average fracture state | SF-FMB100 | CF33 SF-FMB67 | CF33 SF-FMB67 | CF33 SF-FMB67 |

(continued)

| Conditions for shear test (adhesion region) | Result of shear test | Example 10 | Example 11 | Example 12 | Example 13 |
|---|---|---|---|---|---|
| Condition 3. at room temperature after environmental test (25 mm × 25 mm) | Average shear strength (MPa) | 4.12 | 4.04 | 3.96 | 4.06 |
| | Minimum shear strength (MPa) | 3.53 | 3.49 | 3.34 | 3.26 |
| | Average fracture state | CF33 SF-FMB 67 | CF33 SF-FMB 67 | SF-FMB100 | SF-FMB100 |

From the results shown in Table 2, Comparative Examples 1 to 10, which were flame-treated under conditions other than the specific condition, had poor bonded states.

On the other hand, the bonded articles of Examples of the present invention, which were flame-treated under the specific condition, exhibited excellent bonded states even without use of a primer.

These results prove that the bonded article of the present invention has an excellent bonded state even without use of a primer.

Here, the inventors of the present invention analyzed the surfaces of the members in Example 4 and Comparative Example 9 after the flame treatment by X-ray photoelectron spectroscopy (also referred to as XPS or ESCA). Conditions for the above analysis are as follows. The results are shown in Table 3.

(Conditions for analysis by X-ray photoelectron spectroscopy)

- Device: AXIS Nova (manufactured by Kratos Analytical Ltd.)
- X-ray source: monochromatized AlKa
- Analysis area: 700 $\mu$m × 300 $\mu$m

[Table 5]

| Table 3 | Elemental analysis | | | C1s state analysis | | | | |
|---|---|---|---|---|---|---|---|---|
| | atom. % | | | pk1 | pk2 | pk3 | pk4 | pk5 |
| | C | O | N | C-C C-H | | C-O (C-N,C-N-C) | C=O O-C=O | O-C=O |
| Member #6 before Flame treatment | 97.9 | 1.7 | n.d. | 96.9 | | 0.9 | 0.0 | 0.0 |
| Example 4 Member #6 after gas-rich treatment | 97.1 | 2.1 | 0.6 | 94.0 | | 2.5 | 0.5 | 0.2 |
| Comparative Example 9 Member #6 after air-rich treatment | 95.5 | 4.0 | 0.1 | 90.5 | | 4.9 | 1.4 | 0.6 |

From Table 3, in Comparative Example 9, as a result of elemental analysis, oxygen was much, and as a result of analysis of the C1s peak, the peak area of the pk5 portion was large. From the above results of pk5, it can be seen that oxidation excessively proceeded on the surface of the member that was flame-treated under an air-rich condition. Further, referring to the results of Comparative Example 9 in Table 2, AF was observed in the average fracture state under the conditions 1 and 2. From the results regarding the bonded state and the analysis by XPS of Comparative Example 9 as described above, it is considered that oxidation may have excessively proceeded on the surface of the member that was flame-treated under an air-rich condition, and have caused cleavage in plastic molecules, which results in embrittlement of the surface of the member.

On the other hand, as a result of the elemental analysis by XPS of Example 4, the amount of nitrogen was more and the amount of oxygen was less than those in Comparative Example 9. In addition, as a result of analysis of the C1s peak, the peak area of the pk5 portion was small. From the above results, it can be seen that the surface of the member flame-treated under a gas-rich condition or the like has a large amount of introduced nitrogen atoms, and thus has a large amount of nitrogen-containing functional groups generated by the introduction of nitrogen atoms, as well as the oxidation is not excessive. Further, referring to the results of Example 4 in Table 2, there was no AF as the average fracture state, in any of the shear tests under the conditions 1, 2, and 3, which shows that Example 4 had an excellent bonded state. From the results regarding the bonded state and the analysis by XPS of Example 4 as described above, it is considered that the introduction of nitrogen atoms into the surface of the member that was flame-treated under a gas-rich condition or the like caused plastic molecules to hardly have cleavage, and on the other hand, the oxidation proceeds moderately, so that the embrittlement of the surface of the member is suppressed. In addition, even if the plastic molecule is cleaved by excessive oxidation, it is considered that the carboxylic acid generated by the cleavage can react with the nitrogen-containing functional group, whereby the cleavage can be recovered. Furthermore, by having a large amount of nitrogen-containing functional groups, the reactivity with the adhesive is enhanced. In view of the above-described points, it is considered that the present invention can provide a bonded article in which the members exhibit excellent adhesion properties without use of a primer.

Note that the mechanism described above is a presumption of the inventors of the present invention, and the mechanism of the present invention is not limited to the above.

In addition, with the production method of the present invention, a bonded article exhibiting an excellent bonded state can be obtained without use of a primer.

Furthermore, with regard to the production method of the present invention, it can be said as follows from the results of Examples described above: in the dry treatment such as the flame treatment, the robustness (from the viewpoint of a wide allowable range, a small variation, and the like) of the surface treatment condition (for example, the distance between the burner of the flame treatment device and the member, the speed at which the burner of the flame treatment device is moved, and the type of member used) that secures the adhesion properties is superior under a gas-rich condition or the like, to that under an air-rich condition.

**Claims**

1. A bonded article, comprising:

   a first member containing plastic and including a portion that has been flame-treated under a condition A1 shown below; a second member; and an adhesive that bonds the first member and the second member to each other, wherein the first member adheres with the adhesive at the flame-treated portion, and
   a primer is not interposed between the first member and the adhesive:
   (Condition A1) a volume ratio $R_{A1}$ of air and combustion gas used for generation of flame in the flame treatment, and a volume ratio $R_P$ of air and combustion gas when the combustion gas is completely combusted satisfy the following formula (1):

$$0.8 \leq \text{volume ratio } R_{A1}/\text{volume ratio } R_P \leq 1 \ (1)$$

2. The bonded article according to claim 1, wherein
   the first member contains a polyolefin-based resin as the plastic and an inorganic substance.

3. The bonded article according to claim 1 or 2, wherein
   the adhesive is a urethane-based adhesive, an epoxy-based adhesive, a modified silicone-based adhesive, or an acryl-based adhesive.

4. The bonded article according to any one of claims 1 to 3, wherein
   the second member contains plastic, includes a portion that has been flame-treated under a condition A2 shown below, and adheres with the adhesive at the flame-treated portion:
   (Condition A2) a volume ratio $R_{A2}$ of air and combustion gas used for generation of flame in the flame treatment, and a volume ratio $R_P$ of air and combustion gas when the combustion gas is completely combusted satisfy the following formula (2):

$$0.8 \leq \text{volume ratio } R_{A2}/\text{volume ratio } R_P \leq 1 \ (2)$$

5. The bonded article according to any one of claims 1 to 4, wherein

the combustion gas contains propane gas or natural gas.

6. A method for producing a bonded article, the method comprising:

a surface treatment step of flame-treating a first member containing plastic under a condition A1 shown below;
an adhesive application step of applying an adhesive to the flame-treated first member without a primer interposed therebetween; and
a bonding step of laminating the second member on the adhesive and bonding the first member, the adhesive, and the second member:
(Condition A1) a volume ratio $R_{A1}$ of air and combustion gas used for the generation of flame in the flame treatment, and a volume ratio $R_P$ of air and combustion gas when the combustion gas is completely combusted satisfy the following formula (1):

$$0.8 \leq \text{volume ratio } R_{A1}/\text{volume ratio } R_P \leq 1 \ (1)$$

7. The method for producing a bonded article according to claim 6, wherein

the second member contains plastic,
the method further comprising another surface treatment step of flame-treating the second member under a condition A2 shown below, the another surface treatment step being performed in advance before the bonding step,
wherein, in the bonding step, the flame-treated second member is laminated on the adhesive:
(Condition A2) a volume ratio $R_{A2}$ of air and combustion gas used for generation of flame in the flame treatment, and a volume ratio $R_P$ of air and combustion gas when the combustion gas is completely combusted satisfy the following formula (2):

$$0.8 \leq \text{volume ratio } R_{A2}/\text{volume ratio } R_P \leq 1 \ (2)$$

EP 4 134 223 A1

FIG. 1

(a)

10a

10

(b)

12a

12

(c)

30
12

(d)

100

20
32
12

29

# FIG. 2

# FIG. 3

Europäisches
Patentamt

European
Patent Office

Office européen
des brevets

# EUROPEAN SEARCH REPORT

**Application Number**

EP 22 18 9061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 808 559 A1 (YOKOHAMA RUBBER CO LTD [JP]) 21 April 2021 (2021-04-21) * Claim 1, 3, 4; para. [0048, 0095]; fig. 1 * | 1-7 | INV. B29C59/08 B29C65/48 B29C65/00 |
| Y | US 2018/186139 A1 (PADSALGIKAR AJAY [US]) 5 July 2018 (2018-07-05) * Claim 1; para. [0070] * | 1-7 | |
| Y | ZENKIEWICS M: "FLAME MODIFICATION OF THE SURFACE LAYER OF PLASTICS PRODUCTS", INTERNATIONAL POLYMER SCIENCE AND TECHNOLOGY, RAPRA TECHNOLOGY, SHREWABURY, GB, vol. 27, no. 7, 1 January 2000 (2000-01-01), XP000975407, ISSN: 0307-174X * P. 88, right column, second para.-p. 89, right column, first para. * | 1,6 | |
| Y | Mancinelli Stefano: "The fundamentals of flame treatmentprocess and its main parameters", , 30 November 2005 (2005-11-30), XP055983005, Retrieved from the Internet: URL:http://www.essecinet.net/pdf/The%20fundamentals%20of%20flame%20treatment%20process%20and%20its%20main%20parameters.pdf [retrieved on 2022-11-18] * Chapter 4B * | 1,6 | TECHNICAL FIELDS SEARCHED (IPC) B29C |

The present search report has been drawn up for all claims

| Place of search | Date of completion of the search | Examiner |
|---|---|---|
| Munich | 2 January 2023 | Härtig, Thomas |

EPO FORM 1503 03.82 (P04C01)

**EP 4 134 223 A1**

## ANNEX TO THE EUROPEAN SEARCH REPORT
## ON EUROPEAN PATENT APPLICATION NO.

EP 22 18 9061

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2023

| Patent document cited in search report | | Publication date | Patent family member(s) | | Publication date |
|---|---|---|---|---|---|
| EP 3808559 | A1 | 21-04-2021 | CN | 112154066 A | 29-12-2020 |
| | | | EP | 3808559 A1 | 21-04-2021 |
| | | | JP | 7138489 B2 | 16-09-2022 |
| | | | JP | 2019214188 A | 19-12-2019 |
| | | | US | 2021245489 A1 | 12-08-2021 |
| | | | WO | 2019240063 A1 | 19-12-2019 |
| US 2018186139 | A1 | 05-07-2018 | EP | 2701889 A1 | 05-03-2014 |
| | | | JP | 6220777 B2 | 25-10-2017 |
| | | | JP | 6530441 B2 | 12-06-2019 |
| | | | JP | 2014521529 A | 28-08-2014 |
| | | | JP | 2017192734 A | 26-10-2017 |
| | | | US | 2014141256 A1 | 22-05-2014 |
| | | | US | 2016101596 A1 | 14-04-2016 |
| | | | US | 2017028694 A1 | 02-02-2017 |
| | | | US | 2018186139 A1 | 05-07-2018 |
| | | | WO | 2012149179 A1 | 01-11-2012 |

EPO FORM P0459

For more details about this annex : see Official Journal of the European Patent Office, No. 12/82

33

**EP 4 134 223 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017128052 A

- JP 6756393 B